# EUROPEAN PATENT APPLICATION

(11) **EP 4 036 478 A1**
(43) Date of publication of application: **03.08.2022**
(21) Application number: 22154605.4
(22) Date of filing: 01.02.2022
(51) Int. Cl.: F24C 7/08

(54) **OVEN WITH CONTROL FOR MULTIPLE DISHES**

(30) Priority: 01.02.2021 US 202117164651
(71) Applicant: Koninklijke Fabriek Inventum B.V., 3439 MG Nieuwegein (NL)
(72) Inventor: HUIJSING, Hans, Ijsselstein (NL)
(74) Representative: Dehns

(57) **Abstract**

A method comprises receiving a plurality of meals into an oven. The plurality of meals (106) includes at least two different types of meals, each type of meal requiring a different respective cooking time. The method also includes running a separate timer for cooking each respective type of meal in the plurality of meals. A system can comprise an oven cooking compartment (102) configured to receive a plurality of individually packaged meals. The system can also include a controller (110) operatively connected to the oven, the controller including machine readable instructions configured to perform the method recited.

## Description

### BACKGROUND

### 1. Field

The present disclosure relates to aircraft ovens, and more particularly to oven timers.

### 2. Description of Related Art

Aircraft galley ovens are capable of heating multiple individual meals at time to facilitate batch cooking for multiple passengers. Algorithms can be used to ensure the meals are cooked over an appropriate amount of time, e.g., so not only are the meals properly cooked, but they are finished cooking at an appropriate time in the flight when the meals can be served hot.

The conventional techniques have been considered satisfactory for their intended purpose. However, there is an ever present need for improved systems and methods for improved on demand meal service. This disclosure provides a solution for this need.

### SUMMARY

A method comprises receiving a plurality of meals into an oven. The plurality of meals includes at least two different types of meals, each type of meal requiring a different respective cooking time. The method also includes running a separate timer for cooking each respective type of meal in the plurality of meals.

The method can also comprise alerting an operator of status of each type of meal. Alerting the operator can include displaying an indicator of cooking progress for each type of meal in the oven. Displaying an indicator of cooking progress for each type of meal can include displaying a graphical operator interface (GUI) on a display. On the GUI, the display can include a respective progress indicator for each type of meal in the oven. The GUI can also include a respective progress indicator for each individual meal in the oven.

Alerting the operator can also include alerting the operator when each type of meal has reached or is about to reach its respective cooking time and is finished or is about to be finished cooking. Alerting the operator can include sending an alert to a device remote from the oven.

A system can comprise an oven cooking compartment configured to receive a plurality of individually packaged meals. The system can also include a controller operatively connected to the oven, the controller including machine readable instructions configured to perform the method recited in claim 1. The machine readable instructions can be configured to cause the controller to alert an operator of status of each type of meal.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1A is a schematic perspective view of an embodiment of a galley monument constructed in accordance with the present disclosure, showing an oven;
Fig. 1B is perspective view of an embodiment constructed in accordance with the present disclosure, showing flight staff receiving an alert;
Fig. 2 is a side perspective view of the oven of Fig. 1, showing a plurality of meals;
Fig. 3 is a schematic plan view of an example of a graphical user interface;
Fig. 4 is a box diagram showing a method of timing cooking of the meals in Figs. 1-3.

### DETAILED DESCRIPTION

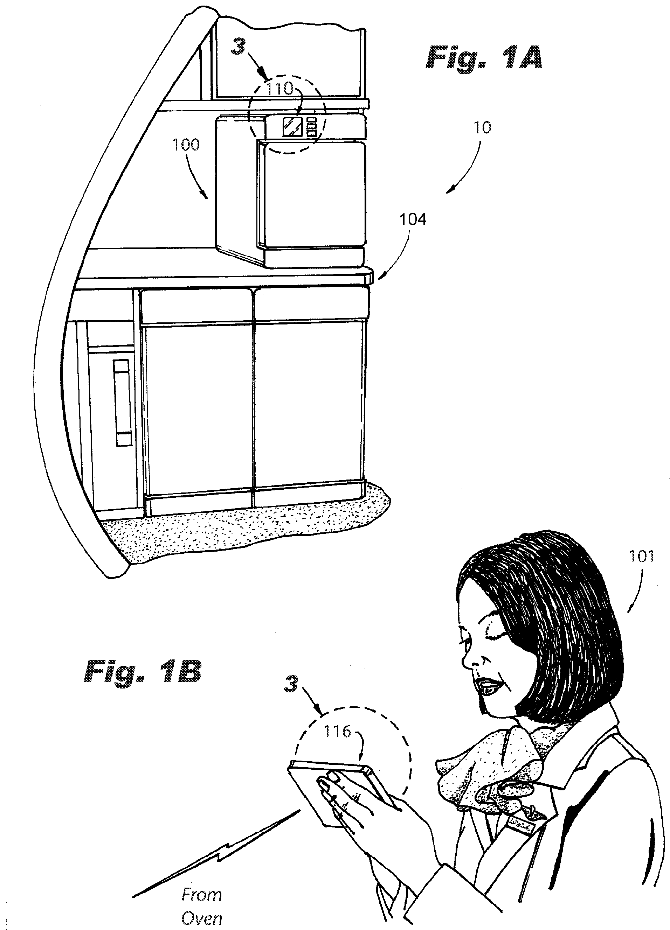

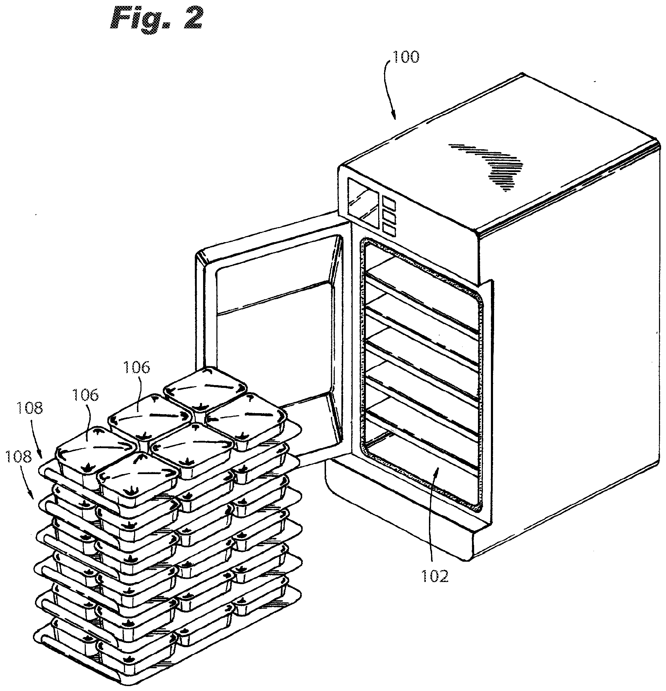

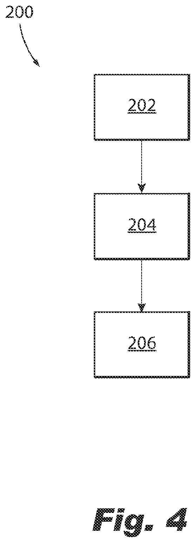

Reference will now be made to the drawings wherein like reference numerals identify similar structural features or aspects of the subject disclosure. For purposes of explanation and illustration, and not limitation, a partial view of an embodiment of an oven in a galley monument in accordance with the disclosure is shown in Fig. 1 and is designated generally by reference character 100. Other embodiments of systems in accordance with the disclosure, or aspects thereof, are provided in Figs. 2-4, as will be described. The systems and methods described herein can be used to time cooking of multiple meals in a single oven.

Referring to Figs. 1-2, a system 10 can include an oven 100 with a cooking compartment 102 and an operator interface 110. The oven 100 can be included in a lower portion of a galley monument 104 as shown, for example a standard oven, or the oven 100 may be placed on a counter, or upper portion within the galley monument 104, for example as a microwave oven, but it should be appreciated that the system 10 and oven 100 can be standalone, e.g. outside of a galley monument. The cooking compartment 102 can be configured to receive a plurality of individually packaged meals 106 (e.g. as shown in Fig. 2). The plurality of individually packaged meals 106 can include at least two different types of meals, where each type of meal requires a different respective cooking time. For example, as shown in Fig. 2, the cooking compartment 102 can have a plurality of trays 108, each tray holding a number of meals of the plurality of individually packaged meals 106. Each of the trays 108 and/or each individual meal of meals 106 can be a different type of meal (e.g. vegetarian vs. meat), or a different type of food (e.g. chicken vs. pasta). The different meals can each have a different respective cooking time.

The system 10 can include a controller operatively connected to the oven 100, for example integrated into an operator interface 110. The controller can include machine readable instructions configured to perform the method 200 described below. The controller can also be configured to control heating elements within the oven as well as steam, pressure, and similar controllable features used for cooking in the oven 100.

A method 200 can comprise receiving the plurality of meals 106 from an operator 101 (e.g. flight staff) into the oven 100, shown at box 202. At box 204, the method 200 can include running a separate timer for cooking each respective type of meal in the plurality of meals 106. It should be appreciated that while the timer(s) are not shown on or within the oven 100, the timer(s) may be included on or in the oven 100, and/or galley monument 104, or within oven software (e.g. controller).

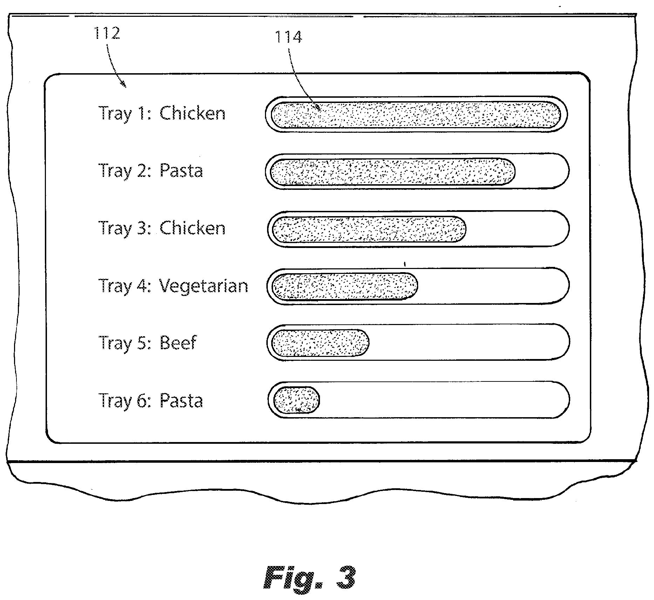

At box 206, the method 200 can also comprise alerting an operator 101 (e.g. flight staff) of the status of each type of meal. As shown in Fig. 1, alerting the operator can be displaying an indicator (e.g. progress indicator 114) of cooking progress for each type of meal in the oven 100 on a graphical user interface (GUI) 112 (as shown in Fig. 3). On the GUI 112, the display can, for example, include a respective progress indicator (e.g. a progress bar) 114 for each type of meal in the oven 100, and/or a respective progress indicator 114 for each individual meal in the oven 100 (e.g. as shown enlarged in Fig. 3). Though a bar is shown for the progress indicator, it is contemplated that any suitable indicator may be used, for example digital numerical count down/up visuals, analog count down/up visuals, and the like.

Alerting the operator 101 can also include alerting the operator 101 when each type of meal has reached, or is about to reach, its respective cooking time, and/or when the meal is finished or is about to be finished cooking (e.g. when there are less than two minutes left, and/or one minute left, etc.). For example, alerting the operator can include sending an alert to a personal electronic device (PED) (e.g. device 116) remote from the oven 100, such as a device carried by flight staff, or a device installed in the galley monument 104, or the alert can be shown in the operator interface 110 on the oven 100 itself. It will be appreciated by those skilled in the art that the remote device 116 can be any suitable device such as a tablet, smartphone, or other device configured to support a graphical display. Further, it is contemplated that the alert can be any suitable alert such as audible, visual, or tactile (e.g. vibration of a personal electronic device), or any combination thereof.

Aspects of this disclosure may be described above with reference to apparatus (systems) and computer program products according to embodiments of this disclosure. It will be understood that any combination of one or more computer readable medium(s) may be utilized.

The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the operator's computer, partly on the operator's computer, as a stand-alone software package, partly on the operator's computer and partly on a remote computer or entirely on the remote computer or server. In the latter scenario, the remote computer may be connected to the operator's computer through any type of network, including a local area network (LAN) or a wide area network (WAN), or the connection may be made to an external computer (for example, through the Internet using an Internet Service Provider).

Aspects of the this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The methods and systems of the present disclosure, as described above and shown in the drawings, provide for enhanced inflight on demand meal service. For example, during flight, flight staff can insert multiple types of meals while the oven is already running and cooking other types of meals that require different cooking times. While the apparatus and methods of the subject disclosure have been shown and described, those skilled in the art will readily appreciate that changes and/or modifications may be made thereto without departing from the scope of the invention as defined by the claims.

## Claims

1. A method comprising:
receiving a plurality of meals (106) into an oven (100), wherein the plurality of meals includes at least two different types of meals, wherein each type of meal requires a different respective cooking time; and
running a separate timer (114) for cooking each respective type of meal in the plurality of meals.

2. The method as recited in claim 1, further comprising alerting an operator (101) of status of each type of meal.

3. The method as recited in claim 2, wherein alerting the operator includes displaying an indicator (114) of cooking progress for each type of meal in the oven.

4. The method as recited in claim 3, wherein displaying an indicator of cooking progress for each type of meal includes displaying a graphical user interface GUI (112) on a display, wherein the GUI includes a respective progress indicator for each type of meal in the oven.

5. The method as recited in claim 4, wherein the GUI includes a respective progress indicator (114) for each individual meal in the oven.

6. The method as recited in claim 2, wherein alerting the operator includes alerting the operator when each type of meal has reached or is about to reach its respective cooking time and is finished or is about to be finished cooking.

7. The method as recited in claim 2, wherein alerting the operator includes sending an alert to a personal electronic device PED (116).

8. The method as recited in claim 7, wherein the alert is at least one of an audible alert and/or visual alert, and/or tactile alert.

9. A system comprising:
an oven cooking compartment (102) configured to receive a plurality of individually packaged meals (106); and
a controller (110) operatively connected to the oven, the controller including machine readable instructions configured to perform the method recited in claim 1.

10. The system as recited in claim 9, wherein the machine readable instructions are configured to cause the controller to alert an operator of status of each type of meal.

11. The system as recited in claim 10, wherein alerting the operator includes displaying an indicator of cooking progress for each type of meal in the oven.

12. The system as recited in claim 11, wherein displaying an indicator (114) of cooking progress for each type of meal includes displaying a graphical user interface GUI (112) on a display, wherein the GUI includes a respective progress indicator for each type of meal in the oven.

13. The system as recited in claim 12, wherein the GUI includes a respective progress indicator for each individual meal in the oven.

14. The system as recited in claim 10, wherein alerting the operator includes alerting the operator when each type of meal has reached or is about to reach its respective cooking time and is finished or is about to be finished cooking.

15. The system as recited in claim 10, wherein alerting the operator includes sending an alert to a PED (116).
